# EUROPÄISCHE PATENTANMELDUNG

(11) **EP 4 089 064 A1**
(43) Veröffentlichungstag der Anmeldung: **16.11.2022**
(21) Anmeldenummer: 22168165.3
(22) Anmeldetag: 13.04.2022
(51) Int. Cl.: C04B 28/02, C04B 111/62

(54) **ZEMENTESTRICH**

(30) Priorität: 12.05.2021 AT 503692021
(71) Anmelder: Ganzi, Gerald, 9064 Magdalensberg (AT); Huber, Martin, 9570 Ossiach (AT)
(72) Erfinder: Ganzi, Gerald, 9064 Magdalensberg (AT); Huber, Martin, 9570 Ossiach (AT)
(74) Vertreter: Hübscher & Partner Patentanwälte GmbH

(57) **Zusammenfassung**

Es wird ein Zementestrich aus einer Gesteinskörnung mit einer oberen Prüfkorngröße von 8 mm und aus Zement als Bindemittel gegebenenfalls mit einem Zementzusatzmittel beschrieben. Um vorteilhafte Verarbeitungsbedingungen sicherzustellen, wird vorgeschlagen, dass die Gesteinskörnung eine durch die untere und obere Siebweite von 2 mm und 8mm begrenzte Korngruppe bildet, deren Unterkornanteil jedoch kleiner als 5 Vol.-% ist.

## Beschreibung

Die Erfindung bezieht sich auf einen Zementestrich aus einer Gesteinskörnung mit einer oberen Prüfkorngröße von 8 mm und aus Zement als Bindemittel gegebenenfalls mit einem Zementzusatzmittel.

Trotz einer sorgfältigen Verarbeitung besteht bei herkömmlichen Zementestrichen, die üblicherweise eine Gesteinskörnung mit einer oberen Prüfkorngröße von 8 mm aufweisen, die Gefahr, dass aufgrund einer ungleichmäßigen Abbindung des Zements und zufolge des Schwindverhaltens Spannungen auftreten, die zum Schüsseln des Estrichs führen können, wenn nicht ausreichend Arbeitsfugen vorgesehen werden. Außerdem ist je nach der Restfeuchte mit einer Begehbarkeit erst nach einer Woche zu rechnen, während die Belegreife erst nach mehreren Wochen sichergestellt ist.

Der Erfindung liegt somit die Aufgabe zugrunde, einen Zementestrich vorzusehen, der nicht nur in Bezug auf die Anfälligkeit gegenüber inneren Spannungen, sondern auch hinsichtlich der Begehbarkeit und der Belegreife stark verbesserte Eigenschaften aufweist.

Ausgehend von einem Zementestrich der eingangs geschilderten Art löst die Erfindung die gestellte Aufgabe dadurch, dass die Gesteinskörnung eine durch die untere und obere Siebweite von 2 mm und 8mm begrenzte Korngruppe bildet, deren Unterkornanteil jedoch kleiner als 5 Vol.-% ist.

Die Erfindung geht von der Erkenntnis aus, dass der hohe Feinanteil der Gesteinskörnung üblicher Zementestriche einen vergleichsweise hohen Anteil an Zugabewasser bedingt, das wiederum Anlass für ein ungleichmäßiges Abbinden des Zements gibt und auch das Schwindverhalten des Zementestrichs negativ beeinflusst. Mit der erfindungsgemäßen Beschränkung des Unterkorns auf einen Anteil kleiner 5 Vol.-% fällt der Einfluss dieses Feinanteils der Gesteinskörnung im Wesentlichen weg, was zunächst dazu führt, dass die Menge des Zugabewassers auf die für das Abbinden des Zements benötigte Wassermenge reduziert werden kann. Dies bedeutet, dass für den Zementestrich keine Austrocknung erforderlich wird und daher der Zementestrich nach dem Abbinden des Zements, also nach etwa 24 h, nicht nur begehbar ist, sondern auch mit feuchtigkeitsempfindlichen Oberbelägen belegt werden kann.

Die vergleichsweise geringe Menge an Zugabewasser wirkt sich vorteilhaft auf ein gleichmäßiges Abbinden des Zements über das gesamte Estrichvolumen aus, wodurch die Gefahr von inneren Spannungen weitgehend ausgeschlossen werden kann, zumal der geringe Gehalt an Zugabewasser das Schwindverhalten erheblich verbessert. Das verminderte Auftreten von inneren Spannungen erlaubt größere Estrichflächen ohne sonst erforderliche Arbeitsfugen. Da kein Spannungsanstieg beim Abbinden des Zements auftritt, ist der erfindungsgemäße Zementestrich auch unempfindlich gegenüber höheren Zementanteilen, sodass sich im Bedarfsfall höhere Festigkeiten einfach verwirklichen lassen.

Beim Aufbringen des Zementestrichs legen sich die vergleichsweise groben Körner der Gesteinskörnung dicht aneinander, was eine zusätzliche Verdichtung überflüssig macht. Ein erfindungsgemäßer Zementestrich ist daher selbstverdichtend. Außerdem bietet die grobkörnige Oberfläche des Zementestrichs vorteilhafte Voraussetzungen zum Aufbringen einer Vergussmasse, die sich in den Zwischenräumen zwischen den oberflächennahen Körnern der Gesteinskörnung verkrallt und die Druckfestigkeit sowie die Biegezugfestigkeit des Zementestrichs verbessert.

Die Vergussmasse, z. B. auf Basis einer Calciumhydroxid-Zementmischung, kann außerdem eingefärbt und zum Teil wieder abgeschliffen werden, um einen angeschliffenen Oberflächenanteil der Gesteinskörnung sichtbar zu machen.

Besonders vorteilhafte Eigenschaften ergeben sich, wenn die Gesteinskörnung eine weitgehend gleichmäßige Verteilung der Korngrößen aufweist. In diesem Zusammenhang empfiehlt sich daher eine Gesteinskörnung, die eine durch die untere und obere Siebweite von 2 mm und 5 mm begrenzte Korngruppe bildet. Um den Einfluss des Unterkornanteils gering zu halten, kann dieser Unterkornanteil der Gesteinskörner vorzugsweise auch kleiner als 2 Vol.-% angesetzt werden.

### Ausführungsbeispiel:

Es werden 340 kg Splitt der Korngruppe 02/05 (untere Siebweite 2mm, obere Siebweite 5 mm) mit einem Unterkornanteil kleiner als 2 Vol.-% als Gesteinskörnung mit 50 kg Zement, dem 125 g eines Fließmittels zugegeben wurden, und 16 I Zugabewasser innig gemischt und mit einer Estrichpumpe auf eine Trittschalldämmung eines Unterbodens schwimmend in einer Schichtdicke von 65 mm aufgetragen. Nach einer Abbindezeit von 24 h war der Zementestrich nicht nur begehbar, sondern auch belegreif.

Die Dichte des fertigen Estrichs betrug ca. 2000 kg/m³. Die Druckfestigkeit konnte mit 40 N/mm² ermittelt werden.

## Patentansprüche

1. Zementestrich aus einer Gesteinskörnung mit einer oberen Prüfkorngröße von 8 mm und aus Zement als Bindemittel gegebenenfalls mit einem Zementzusatzmittel, **dadurch gekennzeichnet, dass** die Gesteinskörnung eine durch die untere und obere Siebweite von 2 mm und 8mm begrenzte Korngruppe bildet, deren Unterkornanteil jedoch kleiner als 5 Vol.-% ist.

2. Zementestrich nach Anspruch 1, **dadurch gekennzeichnet, dass** die Oberfläche des Zementestrichs mit einer Vergussmasse abgedeckt ist.

3. Zementestrich nach Anspruch 1 oder 2, **dadurch gekennzeichnet, dass** die Gesteinskörnung eine durch die untere und obere Siebweite von 2 mm und 5 mm begrenzte Korngruppe bildet.

4. Zementestrich nach einem der Ansprüche 1 bis 3, **dadurch gekennzeichnet, dass** der Unterkornanteil der Gesteinskörnung kleiner als 2 Vol.-% ist.
